# EUROPÄISCHE PATENTSCHRIFT

(11) **EP 0 369 556 B1**
(45) Veröffentlichungstag und Bekanntmachung des Hinweises auf die Patenterteilung: **01.09.1993**
(21) Anmeldenummer: 89250073.7
(22) Anmeldetag: 06.11.1989
(51) Int. Cl.: C01B 3/38, B01J 8/06, B01J 19/24

(54) **Verfahren zur indirekten Erwärmung eines Prozessgasstroms in einem Reaktionsraum für eine endotherme Reaktion und Vorrichtung zu dessen Durchführung**
Process and apparatus for indirectly heating a process gas stream in a reaction space for an endothermal reaction
Procédé et dispositif de chauffage indirect d'un courant de gaz dans un espace de réaction pour une réaction endothermique

(30) Priorität: 10.11.1988 IT 4854788
(43) Veröffentlichungstag der Anmeldung: 23.05.1990
(73) Patentinhaber: MANNESMANN Aktiengesellschaft, 40027 Düsseldorf (DE); K.T.I. Group B.V., NL-2700 AB Zoetermeer (NL)
(72) Erfinder: Giacobbe, Francesco, I-00147 Roma (IT); Mosca, Lorena, I-00141 Roma (IT); Bezzeccheri, Maurizio, Dr., I-80045 Pompei (NA) (IT)
(74) Vertreter: Meissner, Peter E., Dipl.-Ing.

(56) Entgegenhaltungen:
- EP-A- 0 194 067
- EP-A- 0 195 688
- FR-A- 1 327 210

## Beschreibung

Die Erfindung betrifft ein Verfahren zur indirekten Erwärmung eines Prozeßgasstroms in einem Reaktionsraum für eine endotherme, insbesondere katalytische Reaktion gemäß dem Oberbegriff des Patentanspruchs 1 und eine Vorrichtung insbesondere zur Durchführung dieses Verfahrens.

Ein bevorzugtes Einsatzgebiet der Erfindung stellt die katalytische Dampfreformierung von Kohlenwasserstoffen zur Herstellung eines wasserstoffreichen Gases dar. Als Prozeßgas dient ein Gemisch aus Wasserdampf, Kohlenwasserstoff und/oder Kohlendioxyd. Dieses Gasgemisch wird mit Temperaturen von etwa 400 bis 600 Grad C bei Drücken von bis zu 4 MPa einem Reaktionsraum, der aus mehreren katalysatorgefüllten Rohren bestehen kann, zugeführt und dort auf ca. 750 bis 900 Grad C aufgeheizt. Über dem Katalysator reagiert dieses Gasgemisch dann endotherm zu einem wasserstoffreichen Gas mit Anteilen von Kohlenmonoxyd, Kohlendioxyd und Überschüssen an Wasserdampf und Kohlenwasserstoff. Der Wasserstoffgehalt des erzeugten Produktgases hängt u.a. vom Überschuß des verwendeten Wasserdampfes sowie von der Temperatur und dem Druck im katalysatorgefüllten Rohr ab. Ein Ansteigen des Wasserdampfüberschusses und der Temperatur im katalysatorgefüllten Rohr bewirken eine Zunahme der Wasserstoffgewinnung, wahrend eine Druckerhöhung eine Abnahme derselben zur Folge hat.

Aus der EP 0 194 067 B1 ist eine Vorrichtung zur Durchführung einer endothermen katalytischen Reaktion eines Prozeßgasstroms bekannt. Diese weist ein Gehäuse mit einem oder mehreren darin parallel zueinander angeordneten katalysatorgefüllten Rohren mit je einem blinden Ende auf. Im Gehäuse sind Mittel für die Zuführung und Abführung eines Rauchgases zur Beheizung der äußeren Oberfläche der katalysatorgefüllten Rohre, durch deren Inneres der Prozeßgasstrom unter Wärmeaufnahme hindurchgeführt wird, vorgesehen. Die katalysatorgefüllten Rohre sind jeweils von einem rohrförmigen Mantel, der mit dem Rohr einen Ringspalt bildet, umgeben. Der Mantel erstreckt sich über den größeren Teil der Länge des katalysatorgefüllten Rohres. Die Zuleitung für das Rauchgas ist unmittelbar auf das blinde Ende des katalysatorgefüllten Rohres gerichtet. Die dadurch bewirkte direkte Anströmung des katalysatorgefüllten Rohres durch das heiße Rauchgas erweist sich als nachteilig, da hierdurch die thermische Belastung des blinden Endes des katalysatorgefüllten Rohres sehr hoch ist. An kritischen Stellen entstehen im Mantel des katalysatorgefüllten Rohres so hohe Temperaturen, daß es nach relativ kurzer Zeit beschädigt ist und ausgewechselt werden muß, wenn man nicht vorher für eine entsprechende Abkühlung des Rauchgases sorgt. Dies könnte beispielsweise durch einen vorgeschalteten Wärmetauscher oder durch Vermischung mit bereits abgekühltem Rauchgas geschehen. Beide Maßnahmen erfordern entsprechenden zusätzlichen baulichen Aufwand.

Aus der EP-A-195 688 ist ferner ein Verfahren bekannt, bei dem das Reaktionsgemisch durch zwei ringförmige, konzentrisch angeordnete Katalysatorbetten geleitet und dabei indirekt von Rachgasen erwärmt wird. Dazu werden die Rauchgase in einer zylindrischen Verbrennungskammer erzeugt, die in axialer Richtung innerhalb des inneren ringförmigen Katalysatorbettes angeordnet ist. Die Verbrennungskammer besteht dabei aus einem keramischen Material mit - bekanntermaßen - schlechter Wärmeleitfähigkeit. Das heiße Gas tritt am oberen Ende der Kammer aus und trifft auch hierbei mit dieser hohen Temperatur auf die Wärmetauscherwände auf.

Zur Abmilderung der thermischen Belastung der katalysatorgefüllten Rohre ist es bekannt, diese auf ihrer Außenseite mit einer keramischen Schutzummantelung im Bereich der direkten Beaufschlagung mit dem heißen Rauchgas zu versehen. Ein Nachteil derartiger Schutzummantelungen liegt in der Anfälligkeit gegenüber Wärmedehnungsspannungen, die zu Beschädigungen der Keramik und dann lediglich mit zeitlicher Verzögerung auch zu Beschädigungen der katalysatorgefüllten Rohre selbst führen.

Der Erfindung liegt die Aufgabe zugrunde, die Erwärmung des Prozeßgasstroms in einem Reaktionsraum, der insbesondere in Form katalysatorgefüllter Rohre ausgebildet sein kann, dahingehend zu verbessern, daß die thermische Belastung der Wände des Reaktionsraums, also insbesondere der katalysatorgefüllten Rohre im Bereich des Rauchgaseintritts vergleichmäßigt und auf ein unschädliches Maß verringert wird, ohne daß es dazu aufwendiger Maßnahmen bedarf. Dabei soll eine möglichst günstige Energieausnutzung gewährleistet werden. Außerdem soll eine Vorrichtung für die Durchführung des erfindungsgemäßen Erwärmungsverfahrens angegeben werden.

Gelöst wird diese Aufgabe durch ein Verfahren, das die Merkmale des Patentanspruchs 1 aufweist und durch die kennzeichnenden Merkmale des Patentanspruchs 2 in vorteilhafter Weise weitergebildet wird. Eine Vorrichtung zur Durchführung dieses Verfahrens ist im Patentanspruch 3 angegeben. Die kennzeichnenden Merkmale der Unteransprüche 4 bis 13 stellen vorteilhafte Ausgestaltungen der erfindungsgemäßen Vorrichtung dar.

Wegen der bevorzugten Anwendung der Erfindung in katalytischen Prozessen wird im folgenden der Reaktionsraum regelmäßig als katalysatorgefüllte Rohre bezeichnet. Dies soll keine Beschränkung bedeuten, da es für die Durchführung der erfindungsgemäßen Erwärmung bedeutungslos ist, ob es sich um einen katalytischen Prozeß handelt oder nicht.

Der Grundgedanke der Erfindung besteht darin, das zur Beheizung des Reaktionsraumes, d.h. der katalysatorgefüllten Rohre, zugeführte heiße Rauchgas so lange nicht mit diesen Rohren in direkten Kontakt zu bringen, wie das Rauchgas noch auf einer Temperatur ist, die den katalysatorgefüllten Rohren schaden könnte. Es wird vielmehr zunächst an der Außenseite einer rohrförmigen Barriere aus einem wärmeleitenden, thermisch beständigen Material, vorzugsweise aus Metall, entlanggeleitet, kühlt dabei ab und wird nach Umlenkung auf der Innenseite dieser Barriere in umgekehrter Strömungsrichtung weitergeleitet.

Erst das auf der Innenseite der Barriere strömende und bereits etwas abgekühlte Rauchgas tritt in direkten Kontakt mit dem katalysatorgefüllten Rohr und gibt Wärme an dieses ab, wobei es sich weiter abkühlt. Gleichzeitig kann das innenströmende Rauchgas jedoch über die wärmeleitende Barriere Wärme von dem im Gegenstrom außen vorbeiströmenden heißeren Rauchgas aufnehmen. Bis zum Umlenkpunkt kühlt sich das außenströmende Rauchgas dadurch so weit ab, daß es ohne Gefahr einer thermischen Schädigung mit dem katalysatorgefüllten Rohr in direkten Kontakt treten kann. Die Idee der Erfindung ist also darin zu erblicken, daß die auf dem höchsten Temperaturniveau befindliche Wärme des zugeführten heißen Rauchgases nicht direkt sondern indirekt über einen Zwischenwärmetausch mit bereits teilweise abgekühltem Rauchgas auf das katalysatorgefüllte Rohr übertragen wird. Es findet dabei also ein Wärmetausch zwischen zwei Teilstrecken ein und desselben Rauchgasstromes statt. Zur Temperaturerniedrigung des Rauchgases auf ein unschädliches Niveau wird bei der erfindungsgemäßen Lösung weder eine Vermischung mit einem kühleren Wärmeübertragungsmedium, noch ein Zwischenwärmespeicher, noch ein aufwendiger externer Warmetauscher benötigt. Vielmehr reicht hierzu der Einbau einer äußerst einfachen rohrförmigen, wärmebeständigen und wärmeleitenden Barriere aus. Das erfindungsgemäße Lösungsprinzip läßt sich auch bei Vorrichtungen anwenden, in denen mehrere katalysatorgefüllte Rohre in einem gemeinsamen Gehäuse angeordnet sind.

Grundsätzlich ist auch eine umgekehrte Anordnung möglich, bei der die Strömungskanäle des Rauchgases im Mittelbereich der Vorrichtung vorgesehen sind und der Reaktionsraum außen um die Strömungskanäle herum angeordnet ist. Das erfindungsgemäße Erwärmungsverfahren läßt sich dabei in entsprechender Weise anwenden.

Im folgenden wird die Erfindung anhand des in den Figuren dargestellten Ausführungsbeispiels näher erläutert. Es zeigen:
- Fig. 1: einen Längsschnitt durch eine erfindungsgemäße Vorrichtung
- Fig. 2: verschiedene Temperaturverläufe in einer erfindungsgemäßen Vorrichtung im Vergleich zu einer herkömmlichen Vorrichtung.

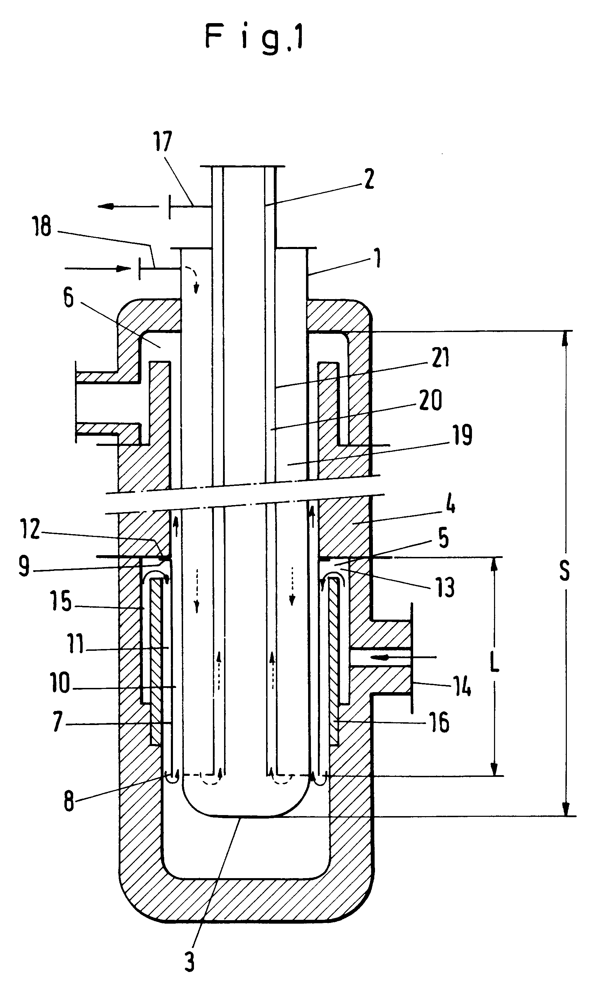

In Figur 1 ist eine erfindungsgemäße Vorrichtung zur Durchführung einer endothermen katalytischen Reaktion, z.B. zur Dampfreformierung von Kohlenwasserstoffen schematisch dargestellt. Die Reaktion findet in einem katalysatorgefüllten Rohr 1 statt, das außen im wesentlichen von einem Gehäuse 4 eingeschlossen ist und innen verschiedene Einbauten aufweist. Zu diesen Einbauten gehört ein oben geschlossenes und unten offenes Wärmeleitrohr 21 und ein in diesem koaxial angeordnetes ebenfalls oben geschlossenes und unten offenes Strömungsverdrängungsrohr 2. Die Katalysatormasse ist zwischen der Wand des Rohres 1 und dem Wärmeleitrohr 21 in einem äußeren Ringraum 19 eingeschlossen. Das Reaktionsgas tritt über den Anschluß 18 in das katalysatorgefüllte Rohr 1 ein und strömt abwärts durch den mit Katalysatormasse gefüllten äußeren Ringraum 19 bis zum geschlossenen Ende 3 des Rohres 1. Das unter dem Einfluß des Katalysators entstandene Produktgas steigt nun aufwärts durch einen weiteren, zwischen dem Wärmeleitrohr 21 und dem Strömungsverdrängungsrohr 2 gebildeten inneren Ringraum 20 und verläßt oben das katalysatorgefüllte Rohr 1 durch den Ausgang 17. Zwischen dem durch den Ringraum 19 strömenden Reaktionsgas und dem durch den Ringraum 20 strömenden wärmeren Produktgas findet über die Wand des dazwischen angeordneten Wärmeleitrohrs 21 ein Wärmetausch statt.

Die für die endotherme katalytische Reaktion benötigte Wärme wird dem katalysatorgefüllten Rohr 1 von außen über ein heißes Rauchgas zugeführt. Das Rauchgas tritt über einen Rauchgaseintrittsstutzen 14 in das Gehäuse 4 ein. Es verteilt sich dabei zunächst in einem unten geschlossenen Ringspalt 15, der durch das Gehäuse 4 und ein zylindrisches Einsatzrohr 16 gebildet wird. Das Rauchgas verläßt diesen Ringspalt 15 oben über einen als Ringkanal 13 ausgebildeten Rauchgaseintritt 5 und strömt mit einer über den Umfang bereits sehr gleichmäßig verteilten Strömung in einen zweiten Ringspalt 11. Der zweite Ringspalt 11 wird gebildet zwischen dem Einsatzrohr 16 und einem als Barriere wirkenden rohrförmigen Körper 7, der an seinem oberen Ende 9 mit dem Gehäuse 4 eine gasdichte Verbindung 12 aufweist. Das Rauchgas strömt abwärts durch den Ringspalt 11 an dem rohrförmigen Körper 7 entlang und kehrt seine Strömungsrichtung am freien Ende 8 des rohrförmigen Körpers 7 um. Dort tritt es in einen Ringspalt 10 ein, der zwischen dem katalysatorgefüllten Rohr 1 und dem rohrförmigen Körper 7 bzw. der Wand des Gehäuses 4 gebildet wird. Das Rauchgas streicht nun in diesem Ringspalt 10 an dem katalysatorgefüllten Rohr 1 aufwärts vorbei und verläßt diesen in deutlich abgekühlter Form durch den Rauchgasaustritt 6. Danach gelangt es über eine nicht eingezeichnete sekundäre Wärmerückgewinnung zum Kamin.

Auf seinem Weg durch den Ringspalt 10 gibt das Rauchgas ständig Wärme durch die Wand des Rohres 1 an das im Gegenstrom durch das katalysatorgefüllte Rohr 1 strömende Reaktionsgas ab. Ein weiterer Wärmetausch findet zwischen dem im Ringspalt 11 nach unten strömenden heißen Rauchgas und dem im Ringspalt 10 nach oben strömenden bereits etwas abgekühlten Rauchgas statt, da der dazwischen als Barriere wirkende rohrförmige Körper 7 aus einem hitzebeständigen, wärmeleitenden Material, vorzugsweise aus Metall gebildet ist. Dieser Wärmetausch hat zur Folge, daß einerseits das heiße Rauchgas während seiner Passage durch den Ringspalt 11 bereits vor seinem ersten Kontakt mit dem katalysatorgefüllten Rohr 1 auf eine Temperatur abgekühlt werden kann, die für das Rohr 1 keine unzulässige thermische Belastung mehr mit sich bringt. Andererseits führt die Wärmeaufnahme des Rauchgases im unteren Teil des Ringspaltes 10 dazu, daß die Rauchgastemperatur trotz der Wärmeabgabe an das Reaktionsgas auf einem relativ hohen Niveau bleibt, so daß für einen wesentlichen Längenabschnitt des katalysatorgefüllten Rohres 1 äußerst günstige Bedingungen für die Beheizung (hohe Wärmeübertragungsleistung) gegeben sind.

Es hat sich als zweckmäßig erwiesen, die axiale Länge L der rohrförmigen Barriere 7 so zu wählen, daß sie etwa das 0,1- bis 0,7-Fache der beheizbaren Lange S des Rohres 1 beträgt.

Die erfindungsgemäße Vorrichtung weist einen sehr einfachen Aufbau auf, der bei Bedarf den problemlosen Austausch einzelner Teile gestattet, da die Einzelteile überwiegend lösbar miteinander verbunden sind. So besteht das Gehäuse 4 aus einem oberen, einem mittleren und einem unteren Teil, die über zwei Flanschverbindungen zusammengehalten werden. Das Einsatzrohr 16, das durch die Rauchgastemperatur und die anprallende Rauchgasströmung vergleichsweise stark belastet ist, besteht aus feuerfestem Material und kann im Fall einer Beschädigung leicht ausgewechselt werden. Entsprechendes gilt für die rohrförmige Barriere 7, die vorzugsweise aus hitzebeständigem Stahl besteht und an sich keinen wesentlichen mechanischen Beanspruchungen ausgesetzt ist, da sie sich unter Einwirkung der heißen Rauchgase frei nach unten ausdehnen kann. Für das katalysatorgefüllte Rohr 1 wäre eine derartige thermische Belastung nicht zulässig, da es zusätzlich unter einem erheblichen Innendruck durch den katalytischen Prozeß besteht. Durch die Wahl unterschiedlicher Durchmesser der rohrförmigen Barriere 7 ergibt sich eine gute Möglichkeit zur Beeinflussung des Wärmetauschs zwischen den Ringspalten 10 und 11, da mit dem Durchmesser der Barriere 7 auch das Verhältnis der freien Strömungsquerschnitte der beiden Ringspalte verändert wird. Eine Durchmesservergrößerung führt daher zu einer schnelleren Durchströmung des Ringspaltes 11 und einer Verlangsamung der Strömung im Ringspalt 10, also zu einer entsprechenden Veränderung des Wärmetauschs. In entsprechender Weise läßt sich auch der Wärmetausch zwischen dem Produktgas und dem Reaktionsgas beeinflussen, indem ein Strömungsverdrängungsrohr 2 mit anderem Durchmesser eingesetzt wird. Die Funktion dieses Strömungsverdrängungsrohrs 2 ist es nämlich, den freien Querschnitt des inneren Ringraums 20 ausreichend zu verkleinern, um das Produktgas so nahe an der Wand des Wärmeleitrohrs 21 entlang zu führen, daß Über die gegebene Baulänge der Vorrichtung jeweils die gewünschte Abkühlung erreicht wird. Durch die Flanschverbindung im oberen Teil des Wärmeleitrohrs 21 läßt sich das Strömungsverdrängungsrohr 2 problemlos austauschen.

Das erfindungsgemäße Erwärmungsverfahren gewährleistet eine gezielte Absenkung der Rauchgastemperaturen auf ein unkritisches Maß für das katalysatorgefüllte Rohr und vermeidet durch die in Figur 1 dargestellte Rauchgasführung durch den Ringspalt 15, den Ringkanal 13, den Ringspalt 11 und den Ringspalt 10 eine außerordentlich gleichmäßige Temperaturverteilung über den Umfang, so daß auch punktuelle thermische Überbelastungen ausgeschlossen werden können.

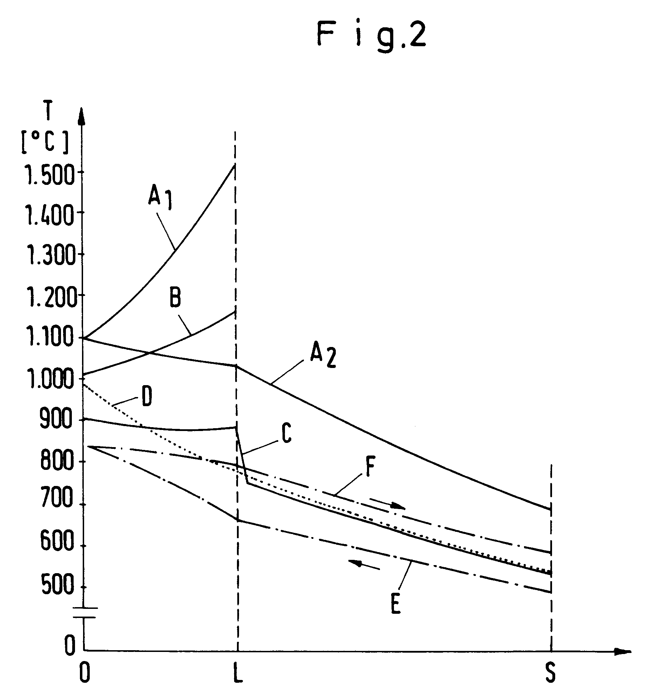

Die Wirksamkeit der erfindungsgemäßen Lösung geht aus den in Figur 2 dargestellten Temperaturverläufen hervor, die jeweils entlang der beheizbaren Länge S eines katalysatorgefüllten Rohres in einer erfindungsgemäßen und in Vergleich dazu in einer konventionellen Vorrichtung zur Wasserstoffherstellung durch Dampfreformierung von Erdgas an verschiedenen Bauteilen und dem Rauchgasstrom gemessen wurden. Die Kurve A1 zeigt für eine erfindungsgemäße Vorrichtung den Temperaturverlauf des mit einer Anfangstemperatur von etwa 1500°C im Ringspalt 11 an der rohrförmigen Barriere 7 nach unten strömenden Rauchgases. Bei Erreichen des unteren Endes 8 der Barriere 7 ist es auf etwa 1100°C abgekühlt und durchströmt dann in umgekehrter Richtung den Ringspalt 10, wobei sich eine Abkühlung gemäß Kurve A2 einstellt. Man erkennt deutlich, daß durch die ausgleichende Wirkung des Wärmetauschs über die Barriere 7 die Abkühlung des Rauchgases vergleichsweise langsam erfolgt. Kurve B zeigt die Temperatur entlang der Länge L der rohrförmigen Barriere 7, die von etwa 1175°C im oberen Teil auf etwa 1110°C im unteren Teil zurückgeht. Wegen der fehlenden mechanischen

Belastung können solche thermischen Beanspruchungen durchaus von marktgängigen warmfesten Stählen ertragen werden. Der Temperaturverlauf in der Rohrwand des katalysatorgefüllten Rohres 1 ist in Kurve C dargestellt. Über die Länge L liegt diese Temperatur nahezu konstant bei etwa 900°C und fällt dann zunachst sehr steil auf etwa 750°C ab, um danach über eine größere Strecke kontinuierlich auf etwa 550°C abzusinken. Damit wird deutlich, daß die Rohrwandtemperatur im katalysatorgefüllten Rohr 1 über die gesamte Länge S auf unkritischen Werten gehalten werden kann. Dies wäre bei gleicher anfänglicher Rauchgastemperatur von etwa 1500°C bei einer konventionellen Vorrichtung, d.h. ohne die erfindungsgemäße Metallbarriere 7 nicht möglich gewesen, wie Kurve D zeigt, da der untere Teil des katalysatorgefüllten Rohres 1 sich dann bis auf etwa 1000°C erwärmen würde. Der Temperaturverlauf des mit etwa 500°C in das katalysatorgefüllte Rohr einströmende Prozeßgas ist als Kurve E erkennbar. Die Strömungsrichtung ist durch einen Pfeil symbolisiert. Der Temperaturverlauf des nach der katalytischen Umsetzung abströmenden Produktgases ist als Kurve F dargestellt. Man sieht an der Temperaturabnahme von etwa 840°C auf ca. 600°C, daß ein großer Teil der im Produktgas enthaltenen Wärme an das einströmende Prozeßgas übergeht.

Die erfindungsgemäße Vorrichtung bringt neben ihrem einfachen, wenig aufwendigen Aufbau und der daraus resultierenden Wartungsfreundlichkeit, die sie besonders für den Einsatz in miniaturisierten Wasserstofferzeugungsanlagen geeignet macht, zahlreiche weitere Vorteile Mit sich:
- Die Rohrwandtemperatur des katalysatorgefüllten Rohres wird auf unkritischen Werten gehalten.
- Durch entsprechende Gestaltung der rohrförmigen Barriere läßt sich trotz unterschiedlicher Heizwerte der für die Beheizung verwendeten Brennstoffe die gleiche Rohrwandtemperatur am katalysatorgefüllten Rohr einstellen.
- Im Bereich der rohrförmigen Barriere findet ein äußerst wirksamer Wärmetausch zwischen dem Rauchgas und dem Reaktionsgas statt.
- Durch die Vergleichmäßigung der Rauchgasströmung werden örtliche Überhitzungen vermieden.
- Durch die Wahl des Durchmessers des leicht austauschbaren Strömungsverdrängungsrohr läßt sich die Abkühlung des Produktgases auf einen gewünschten Wert einstellen.
- Durch die gute Ausnutzung der Rauchgaswärme wird der Brennstoffverbrauch reduziert.
- Durch die Flanschverbindung zwischen dem Wärmeleitrohr und dem katalysatorgefüllten Rohr läßt sich der Katalysator ohne weiteres austauschen, ohne daß hierzu das katalysatorgefüllte Rohr ausgebaut werden muß.

### Positionsliste

- Nr.: Bezeichnung
- 1: Reaktionsraum (katalysatorgefülltes Rohr)
- 2: Strömungsverdrängungsrohr
- 3: Geschlossenes Ende des katalysatorgefüllten Rohres
- 4: Gehäuse
- 5: Rauchgaseintritt
- 6: Rauchgasaustritt
- 7: Rohrförmiger Körper (Barriere)
- 8: freies Ende des rohrförmigen Körpers 7
- 9: oberes Ende des rohrförmigen Körpers 7
- 10: Ringspalt
- 11: Ringspalt
- 12: Gasdichte Verbindung
- 13: Ringkanal
- 14: Rauchgaseintrittsstutzen
- 15: Ringspalt
- 16: zylindrisches Einsatzrohr
- 17: Ausgang für Produktgas
- 18: Anschluß für Reaktionsgas
- 19: äußerer Ringraum mit Katalysatorfüllung
- 20: innerer Ringraum
- 21: Wärmeleitrohr
- L: Länge des rohrförmigen Körpers
- S: Länge des beheizten katalysatorgefüllten Rohres

## Patentansprüche

1. Verfahren zur indirekten Erwärmung eines Prozeßgasstromes in einem Reaktionsraum für eine endotherme, insbesondere katalytische Reaktion, bei dem die Wände des Reaktionsraumes an der außerhalb des Reaktionsraumes gelegenen Oberfläche von einem heißen Rauchgas umströmt werden und die aufgenommene Wärme an das Prozeßgas abgegeben wird, wobei das heiße Rauchgas zunächst an einer aus einem wärmeleitenden und wärmebeständigen Material gebildeten Barriere entlanggeführt wird, wobei das Rauchgas Wärme an diese Barriere abgibt und auf der gegenüberliegenden Seite der Barriere in entgegengesetzter Richtung weitergeführt und erst dabei in Kontakt mit der Außenseite der Wände des Reaktionsraumes gebracht wird, wobei das in entgegengesetzter Richtung weitergeführte Rauchgas einerseits von der Barriere Wärme aufnimmt und andererseits Wärme an den Reaktionsraum abgibt,
**dadurch gekennzeichnet**,
daß das heiße Rauchgas an einer Metallbarriere entlanggeführt wird und dabei von einer bei 1500 Grad Celsius liegenden Ausgangstemperatur ohne Vermischung mit einem kühleren Wärmeübertragungsmedium bis zur Umlenkung auf die andere Seite der Barriere auf eine für die Wände des Reaktionsraumes unschädliche Temperatur im Bereich 1100 Grad Celsius abgekühlt wird.

2. Verfahren nach Anspruch 1,
**dadurch gekennzeichnet**,
daß das durch die endotherme Reaktion aus dem Prozeßgas erzeugte Produktgas im Gegenstrom zum eintretenden Prozeßgasstrom aus dem Reaktionsraum herausgeführt wird, wobei der Prozeßgasstrom und der Produktgasstrom durch eine wärmeleitende Trennwand voneinander getrennt werden und der Produktgasstrom zur Intensivierung eines Wärmeaustausches zwischen diesen Gasströmen mit einem flachen Strömungsquerschnitt an der Trennwand entlanggeführt wird.

3. Vorrichtung insbesondere zur Durchführung des Verfahrens nach Anspruch 1 mit einem Reaktionsraum (1), der insbesondere aus mindestens einem katalysatorgefüllten Rohr gebildet ist und der mit Einbauten (Wärmeleitrohr (21)) versehen ist, ein geschlossenes Ende (3) aufweist und von außen durch ein Rauchgas beheizbar ist, und mit einem Gehäuse (4), das mit einem Rauchgaseintritt (5) und einem Rauchgasaustritt (6) versehen ist und im Bereich der Außenbeheizung den Reaktionsraum (1) umgibt, sowie mit einem rohrförmigen Körper (7), der den Reaktionsraum (1) mindestens über eine Teillänge umgibt und ein erstes freies Ende (8) und ein zweites gasdicht mit dem Gehäuse (4) verbundenes Ende (9) aufweist, wobei das freie kEnde (8) dem geschlossenen Ende (3) des Reaktionsraumes (1) zugewandt ist und wobei der rohrförmige Körper (7) mit der Wand des Reaktionsraumes (1) einen ersten Ringspalt (10) und mit dem Gehäuse (4) einen zweiten Ringspalt (11) bildet,
dadurch gekennzeichnet,
daß der Rauchgaseintritt (5) unmittelbar am zweiten Ringspalt (11) mit Abstand vom freien Ende (8) des aus wärmeleitendem Material bestehenden rohrförmigen Körpers (7) angeordnet ist.

4. Vorrichtung nach Anspruch 3,
dadurch gekennzeichnet,
daß der Rauchgaseintritt (5) in unmittelbarer Nähe des zweiten Endes (9) des rohrförmigen Körpers (7) angeordnet ist.

5. Vorrichtung nach den Ansprüchen 3 oder 4,
dadurch gekennzeichnet,
daß der rohrförmige Körper (7) aus Metall hergestellt ist.

6. Vorrichtung nach einem der Ansprüche 3 bis 5,
dadurch gekennzeichnet,
daß die Länge (L) des rohrförmigen Körpers (7) zwischen dem 0,1- bis 0,7-Fachen der Länge (S) des im Bereich der Außenbeheizung liegenden Reaktionsraums (1) liegt.

7. Vorrichtung nach einem der Ansprüche 3 bis 6,
dadurch gekennzeichnet,
daß die gasdichte Verbindung (12) des rohrförmigen Körpers (7) mit dem Gehäuse (4) eine demontierbare Verbindung ist.

8. Vorrichtung nach einem der Ansprüche 3 bis 7,
dadurch gekennzeichnet,
daß der Rauchgaseintritt (5) über einen zum rohrförmigen Körper (7) konzentrisch in der Wand des Gehäuses (4) angeordneten Ringkanal (13) mit einem Rauchgaseintrittsstutzen (14) verbunden ist.

9. Vorrichtung nach Anspruch 8,
dadurch gekennzeichnet,
daß der Ringkanal (13) über einen dritten, in der Wand des Gehäuses (4) angeordneten Ringspalt (15) mit dem Rauchgaseintrittsstutzen (14) verbunden ist.

10. Vorrichtung nach Anspruch 9,
dadurch gekennzeichnet,
daß der dritte Ringspalt (15) nach innen durch ein zylindrisches Einsatzrohr (16) in der Wand des Gehäuses(4) begrenzt wird.

11. Vorrichtung nach Anspruch 10,
dadurch gekennzeichnet,
daß das zylindrische Einsatzrohr (16) demontierbar ist und aus feuerfestem Material hergestellt ist.

12. Vorrichtung nach einem der Ansprüche 3 - 11,
dadurch gekennzeichnet,
daß die Einbauten in dem Reaktionsraum (1) ein zentrales koaxial angeordnetes einseitig offenes Strömungsverdrängungsrohr (2) umfassen.

13. Vorrichtung nach einem der Ansprüche 4 - 12,
dadurch gekennzeichnet,
daß das Gehäuse (4) eine Kombination von einem Metallmantel mit einer inneren feuerfesten Auskleidung ist.

## Claims

1. A process for indirectly heating a process gas stream in a reaction chamber for an endothermic, in particular catalytic, reaction, in which a hot flue gas flows around the walls of the reaction chamber on the surface located outside the reaction chamber, and the heat absorbed is given off to the process gas, in which the hot flue gas is first guided along a barrier formed from a heat-conductive and heat-resistant material, the flue gas giving off heat to this barrier and is guided further in the opposite direction on the opposite side of the barrier and not until then is brought into contact with the outside of the walls of the reaction chamber, the flue gas which is guided further in the opposite direction on one hand absorbing heat from the barrier and on the other hand giving off heat to the reaction chamber, characterised in that the hot flue gas is passed along a metal barrier and in so doing is cooled from a starting temperature around 1500 degrees celsius to a temperature in the region of 1100 degrees celsius which is not harmful to the walls of the reaction chamber without mixing with a cooler heat-transfer medium until it is deflected on to the other side of the barrier.

2. A process according to Claim 1, characterised in that the product gas produced from the process gas by the endothermic reaction is guided out of the reaction chamber in a counter-current to the incoming process gas stream, the process gas stream and the product gas stream being separated from one another by a heat-conductive partition and the product gas stream, in order to intensify a heat exchange between these gas streams, being guided along the partition with a flat flow cross-section.

3. An apparatus in particular for performing the process according to Claim 1, with a reaction chamber (1) which is formed in particular from at least one catalyst-filled tube and which is provided with fittings (heat-conducting tube (21)), has a closed end (3) and can be heated externally by a flue gas, and with a housing (4) which is provided with a flue gas inlet (5) and a flue gas outlet (6) and surrounds the reaction chamber (1) in the region of the external heating means, and with a tubular body (7) which surrounds the reaction chamber (1) at least over a partial length and has a first free end (8) and a second end (9) connected in gastight fashion to the housing (4), the free end (8) facing the closed end (3) of the reaction chamber (1) and the tubular body (7) forming a first annular gap (10) with the wall of the reaction chamber (1) and forming a second annular gap (11) with the housing (4), characterised in that the flue gas inlet (5) is located directly on the second annular gap (11) at a distance from the free end (8) of the tubular body (7) which consists of heat-conductive material.

4. An apparatus according to Claim 3, characterised in that the flue gas inlet (5) is located in the immediate vicinity of the second end (9) of the tubular body (7).

5. An apparatus according to Claims 3 or 4, characterised in that the tubular body (7) is made of metal.

6. An apparatus according to one of Claims 3 to 5, characterised in that the length (L) of the tubular body (7) is between 0.1 and 0.7 times the length (S) of the reaction chamber (1) which is located in the region of the external heating means.

7. An apparatus according to one of Claims 3 to 6, characterised in that the gastight connection (12) of the tubular body (7) to the housing (4) is a connection which can be dismantled.

8. An apparatus according to one of Claims 3 to 7, characterised in that the flue gas inlet (5) is connected, via a ring duct (13) arranged concentrically to the tubular body (7) in the wall of the housing (4), to a flue gas inlet port (14).

9. An apparatus according to Claim 8, characterised in that the ring duct (13) is connected to the flue gas inlet port (14) via a third annular gap (15) located in the wall of the housing (4).

10. An apparatus according to Claim 9, characterised in that the third annular gap (15) is limited on the inside by a cylindrical liner tube (16) in the wall of the housing (4).

11. An apparatus according to Claim 10, characterised in that the cylindrical liner tube (16) can be dismantled and is made of refractory material.

12. An apparatus according to one of Claims 3 - 11, characterised in that the fittings in the reaction chamber (1) comprise a central, coaxially arranged flow displacement tube (2) which is open on one side.

13. An apparatus according to one of Claims 4 - 12, characterised in that the housing (4) is a combination of a metal casing with an inner refractory lining.

## Revendications

1. Procédé pour le réchauffage indirect d'un courant gazeux de procédé dans un espace réactionnel pour une réaction endothermique, en particulier catalytique, dans lequel les parois de l'espace réactionnel sur la surface se trouvant à l'extérieur de l'espace réactionnel sont parcourues par un gaz de fumée chaud et la chaleur reçue est délivrée au gaz de procédé, le gaz de fumée chaud étant tout d'abord guidé le long d'une barrière formée en une matière conductrice de la chaleur et résistant à la chaleur, le gaz de fumée délivrant de la chaleur à cette barrière, et encore guidé sur le côté opposé de la barrière, en sens inverse, et étant amené alors en contact avec la face externe des parois de l'espace réactionnel, le gaz de fumée guidé en sens inverse, d'une part, recevant de la chaleur de la barrière et, d'autre part, délivrant de la chaleur à l'espace réactionnel,
caractérisé en ce que le gaz de fumée chaud est guidé le long d'une barrière métallique et, de plus, est refroidi d'une température initiale de 1500°C, sans mélange avec un fluide de transfert de chaleur plus froid, jusqu'au renvoi sur l'autre côté de la barrière à une température, inoffensive pour les parois de l'espace réactionnel, dans la zone de 1100°C.

2. Procédé selon la revendication 1,
caractérisé en ce que le gaz de produit créé à partir du gaz de procédé par la réaction endothermique est évacué, à contre-courant par rapport au courant de gaz de procédé entrant, de l'espace réactionnel, le courant de gaz de procédé et le courant de gaz de produit étant séparés l'un de l'autre par une paroi de séparation conductrice de la chaleur, et le courant de gaz de produit étant guidé le long de la paroi de séparation, en ayant une section transversale d'écoulement plate, pour intensifier l'échange thermique entre ces courants gazeux.

3. Dispositif, en particulier pour la mise en oeuvre du procédé selon la revendication 1, comportant un espace réactionnel (1) qui, en particulier, est formé d'au moins un tube rempli de catalyseur et qui est muni d'éléments installés (tube conducteur thermique (21)), présente une extrémité fermée (3) et peut être chauffé, de l'extérieur, par un gaz de fumée, et un carter (4) qui est muni d'une entrée de gaz de fumée (5) et d'une sortie de gaz de fumée (6) et entoure l'espace réactionnel (1) dans la zone du chauffage externe, ainsi qu'un corps tubulaire (7), qui entoure l'espace réactionnel (1) au moins sur une longueur partielle de celui-ci et présente une première extrémité libre (8) et une seconde extrémité (9) reliée, de façon étanche au gaz, au carter (4), l'extrémité libre (8) étant en regard de l'extrémité fermée (3) de l'espace réactionnel (1), et le corps tubulaire (7) formant, avec la paroi de l'espace réactionnel (1), une première fente annulaire (10) et, avec le carter (4), une seconde fente annulaire (11), caractérisé en ce que l'entrée de gaz de fumée (5) est agencée directement sur la seconde fente annulaire (11) à distance de l'extrémité libre (8) du corps tubulaire (7) constitué d'une matière conductrice de la chaleur.

4. Dispositif selon la revendication 3,
caractérisé en ce que l'entrée de gaz de fumée (5) est agencée à proximité directe de la seconde extrémité (9) du corps tubulaire (7).

5. Dispositif selon la revendication 3 ou 4,
caractérisé en ce que le corps tubulaire (7) est fabriqué en métal.

6. Dispositif selon une des revendications 3 à 5,
caractérisé en ce que la longueur (L) du corps tubulaire (7) vaut entre 0,1 et 0,7 fois la longueur (S) de l'espace réactionnel (1) se trouvant dans la zone du chauffage externe.

7. Dispositif selon une des revendications 3 à 6,
caractérisé en ce que la liaison étanche au gaz (12) du corps tubulaire (7) au carter (4) est une liaison démontable.

8. Dispositif selon une des revendications 3 à 7,
caractérisé en ce que l'entrée de gaz de fumée (5) est reliée à un manchon d'entrée du gaz de fumée (14) par l'intermédiaire d'un canal annulaire (13) agencé dans la paroi du carter (4) de façon concentrique au corps tubulaire (7).

9. Dispositif selon la revendication 8,
caractérisé en ce que le canal annulaire (13) est relié au manchon (14) d'entrée du gaz de fumée par l'intermédiaire d'une troisième fente annulaire (15) prévue dans la paroi du carter (4).

10. Dispositif selon la revendication 9,
caractérisé en ce que la troisième fente annulaire (15) est limitée vers l'intérieur par un tube cylindrique (16) dans la paroi du carter (4).

11. Dispositif selon la revendication 10,
caractérisé en ce que le tube cylindrique (16) est démontable et est fabriqué en une matière réfractaire.

12. Dispositif selon une des revendications 3 à 11,
caractérisé en ce que les éléments installés dans l'espace réactionnel (1) entourent un tube central (2) à effet pelliculaire, agencé de façon coaxiale et ouvert d'un côté.

13. Dispositif selon une des revendications 4 à 12,
caractérisé en ce que le carter (4) est une combinaison d'une enveloppe métallique et d'un revêtement interne réfractaire.
